# EUROPEAN PATENT APPLICATION

(11) **EP 2 253 653 A1**
(43) Date of publication of application: **24.11.2010**
(21) Application number: 10004918.8
(22) Date of filing: 10.05.2010
(51) Int. Cl.: C08G 18/76, B32B 5/00, C08J 9/36, C09K 5/02, F28D 20/02

(54) **Viscoelastic polyurethane foam with particular surface and relative procedure**

(30) Priority: 11.05.2009 IT PD20090127
(71) Applicant: New Wind S.r.l., 72017 Ostuni (BR) (IT)
(72) Inventor: Piccinini, Filippo, 35027 Padova PD (IT); Cruccas, Nilso, 85034 Francavilla Sul Sinni (PZ) (IT)

(57) **Abstract**

The invention involves a viscoelastic polyurethane foam product with a particular surface that has PCM particles (Phase-change material), and the procedure for making it. (Fig. 1)

## Description

This invention concerns the viscoelastic polyurethane foam that is obtained from a new reaction mixture that provides the foam itself with improved thermal and technical properties, and whose surface has special thermal properties.

The polyurethane foams have a cellular structure that encloses a high percentage of air in its volume, and an open cell surface that allows air to circulate in the product. Their properties of fluffiness and elasticity make them particularly suitable as padding in various types of applications. In particular their use is well-known in furnishing components like mattresses and pillows, and in the automotive sector for the padding used in seats and backrests, where the softness of the surface and an elevated capacity to sustain and distribute the weight of the human body are properties that are highly valued.

For these applications, viscoelastic polyurethane foams are well known, which are capable of self-modelling after being compressed, for example under the weight of the human body, to then return slowly to their original shape once the source of the compression has been removed. During the compression phase, these foams take on the form of the compressing body, reproducing its impression, occupying also the minimal air spaces inside them. When they are used as a mattress, for example, the entire body is therefore supported and its weight is evenly distributed over the entire support surface.

Various types of foams are known that have some improved properties, which are obtained through specific changes to the reaction mixture.

From European patent no. 1240228 there are documented viscoelastic polyurethane foams that have a very low resilience, good resistance to laceration and a very high stretching property. According to the description, these foams are obtained through the reaction of a polyisocyanate compound with three types of polyoxyethylene- polyoxypropylene polyols and optionally a polyalkyleneglycol, according to precise weight ratios.

From the international patent application WO 2004/020496, there are recognised combinations of polyols that can be used for producing viscoelastic polyurethane foams that are extremely resilient. One of the important technical properties of the viscoelastic foams is the capacity to maintain its viscoelastic properties when the temperature changes. In particular, the time taken for the slow return to shape after compression is a parameter that is significantly influenced by the temperature. Certain applications, like for example the ones mentioned above in the automotive industry, subject the viscoelastic polyurethane foam to a wide range of temperatures, especially in areas that have very cold seasons or very hot summers. As a result, the foam has to be able to meet the requisites required both by colder temperatures as well as hotter ones.

In addition, in order to obtain the utmost comfort not only is a high elastic yield under diverse conditions important, but also the density and the resilience of the polyurethane foam itself, as well as its capacity to maintain the same high performance over time plays an important part.

Nevertheless, the above-mentioned viscoelastic polyurethane foams have numerous problems, mainly due to the fact that they do not remove heat from the contact surface, because, as it is well known, polyurethane is an excellent thermal insulator.

There are also other heat-sensitive viscoelastic polyurethane foams on the market, but this characteristic is exploited for its deformation according to the heat of the human body that rests on them.

In addition, also the above-mentioned heat-sensitive viscoelastic polyurethane foams have the drawback that the removal of the heat from the contact surface is lacking.

In the past, to overcome these drawbacks a layer of a material with special thermal-physical characteristics was placed against the surface of these polyurethane foams.

But this union, generally carried out with an adhesive, between the above-mentioned layer of material with special thermal-physical properties and the polyurethane foam has numerous drawbacks.

The main drawbacks of this arrangement lie in the use of solvents in the adhesive, with a consequent deterioration of the polyurethane foam, in the impossibility of joining profiles that are not flat (for example with undercuts), in the precarious union between the polyurethane foam and the layer of the surface material.

The purpose of this invention is to eliminate the technical drawbacks of the known technology set out above.

In particular, the purpose of this invention is to provide a polyurethane foam, preferably viscoelastic, that has good properties and where the heat is taken away from the surface, so as to provide the item, which is the object of the invention, with thermal comfort properties that overcome the drawback of a polyurethane product that in normal conditions, because it is an excellent insulator, retains the heat and therefore, in hot and humid conditions, provides decidedly poor thermal comfort.

In fact, for example, a surface that when it comes into contact with the human body extracts heat from it provides a feeling of freshness.

Another purpose of the invention is to realise a product with one or more surfaces with heat removal properties, and which is solidly fixed to the polyurethane foam support.

It is likewise the purpose of the invention to provide a low environmental impact procedure for making such viscoelastic polyurethane foam that can render it suitable for domestic use and in the automotive sector.

The purposes set out above have been attained using the polyurethane foam that can be obtained from the reaction and processing system that provides for the deposit, on one or more surfaces of a mould, of a thin layer of a mix containing PCM (Phase-change material) and therefore the creation of a particular polyurethane foam within the same mould.

The above-mentioned PVM, contained in the above-mentioned mix, is used preferably in the form of particles.

These PCM particles are encapsulated and kept in suspension in a mixture containing at least a primer or a physically drying coating (for the evaporation of the solvent, like vinyls, acrylics, chlorinated rubber, epoxies, mono-components, thermoplastics, bitumes); and/or chemically drying coatings or primers (coatings like vilkyds, oleophenolics, oleoresins, the epoxy-esters); and/or bi-components (coatings that harden through the chemical reaction of the binder with another component (hardener) like epoxies, polyurethanes, polyesters); and/or hygrohardening coatings (in general composed of polyurethanes, these particular paints harden through the reaction of the product with the moisture in the air); and at least a thinner (including water).

It can be seen that in the above-mentioned mix the thinner is not always needed, and therefore might not be present.

Eventually the PCM material can be used as particles or micro-capsules to regulate the heat, preferably in an acrylic material.

In its favour, the above-mentioned mixture is sprayed directly onto one or more surfaces of said mould (eventually also only on a limited area of one of the surfaces of the mould) taking the form of a thin film.

Hereafter the term "film" will be used to indicate this mixture.

Later, a mix of diisocyanate and a polyol compound is injected or poured directly into said mould to make the polyurethane foam, or any other polyurethane.

Preferably the particular polyurethane foam adopted is the viscoelastic polyurethane foam.

The possibility of using said thin film and which is co-moulded with the polyurethane composition, provides a sure grip to the polyurethane base, preventing detrimental detachments; in fact, said co-moulding, which occurs soon after inside the mould, allows the "film" to bond tightly with the viscoelastic polyurethane, especially if it is of the open-cell variety.

If needed, the polyurethane foam base can be replaced by flexible foam for moulding, obtaining equally good results.

In fact, latex could be used instead of polyurethane foam.

The procedure for making the product, the object of this invention, in addition to providing a secure bond between the film and the polyurethane foam base also allows you to obtain uniform thicknesses, and a drying of the film without the relative solvent degrading the adjacent polyurethane.

Indeed, since the product that is injected or poured into the mould is a liquid, once it is in the mould it starts to react, and it permanently binds with the "film" following the contour of the mould.

It should be pointed out that because the finished polyurethane is an open-cell material (sponge type), the "film" would have a terrible resolution if afterwards a layer of it was put over a polyurethane surface, for the following reason: because it is open-cell, the "primer-mixture" product would penetrate deep down and in the drying phase, which is what allows the film to form, we would have very differentiated drying parts, with a consequent partial detachment of the film and the drawback, and not a insignificant one, that the solvents would anyway degrade the polyurethane, compromising its chemical and physical properties.

Therefore the product that is the object of the invention overcomes these above-mentioned drawbacks: a poor surface finish and poor surface aesthetic quality, and a product that is deficient with regard to its physical properties.

From the numerous tests carried out the possibility of using a "film" (containing primer or coating, thinner and PCM particles) in the following proportions has been verified: a primer or coating in a quantity from 30 to 70 parts by weight out of a 100 parts by weight of the "film" composition, from 5 to 60 parts of PCM (Phase-change material) in weight out of 100 parts in weight of the "film" composition.

In a preferred form of the invention, the "film" is composed of a quantity of 50 to 67 parts by weight of primer out of 100 parts by weight of film, from 10 to 25 parts by weight of the thinner out of 100 parts by weight of the film, from 10 to 40 parts by weight of the PCM out of 100 parts by weight of the film.

If needed the "film" can be made also with other types of PCM for heat regulation applications (any type of phase- changing micro-capsule), or, if micro-capsules are to be used with additives of particular substances (for example, added vitamins or provitamins), for the emission of such substances (like vitamins).

In the latter case, the vitamins A, C and E enclosed in the micro-capsules, preferably made of wax, help to raise the immune system defences, thereby improving rest and the capillary circulation.

Further properties and benefits will be clearer from the description of some preferred forms, by way of example only and not restrictive, for making the invention regarding some examples of the procedure for obtaining three different samples.

The diversity of the samples obtained consists of the diversity of the mixture that makes the surface "film" with the co-moulded viscoelastic polyurethane, with consequent variations in the properties.

### Example 1

At room temperature (about 22 °C) 62 grams of coating with a tetrahydrofuran solvent are weighed in a balance and then put into a container. Into this container are added 18 grams of thinner, finally 20 grams of PCM are weighed and are added to the container, and everything is mixed with a shaker (the entire mix is called "film") until it is sufficiently homogeneous.

The surfaces of a mould are sprinkled with a release agent, in our case a 15 litres test mould in the shape of a parallelepiped.

The "film" is put in the cup of spray-gun for coatings, and a total of 50 grams of film is distributed over the surface of the mould.

800 grams of viscoelastic polyurethane mix are weighed out, and put in a flask.

504 grams of diphenylmethane diisocyanate are weighed out (63 parts by weight) and it is poured into the flask containing the 800 grams of the viscoelastic mix.

Everything is mixed again for about 8 seconds. The final mixture (a liquid) obtained in this way was strained into the above-mentioned 15 litres mould and left to react for not less than 6 minutes at room temperature (about 22°C), until the foaming phase is complete. In this phase the polyurethane forms a single body with the "film". Once it has formed, the foam is extracted from the mould.

The compounds mentioned above, and in the amounts mentioned above, were processed in this way at room temperature and at an ambient pressure.

### Example 2

The procedure follows the same steps as example 1, with the following modifications to the amounts of the products used:
58 grams of coating;
18 grams of thinner;
24 grams of PCM

The quantities for making the viscoelastic polyurethane mix remain the same.

### Example 3

The procedure follows the same steps as example 1, with the following modifications to the amounts of the products used:
55 grams of coating;
15 grams of thinner;
30 grams of PCM

The quantities for making the viscoelastic polyurethane mix remain the same.

### Example 4

The procedure follows the same steps as example 1, with the difference that the "film" is not made and distributed inside the mould, so as to obtain a blank sample for assessing the shifts in the temperature gradient.

The above-mentioned samples were then left to season for 72 hours and then subjected to tests regarding their capacity to absorb energy.

The results of these tests are reported below:
Sample of Example 1 Delta H = 16.2 J/g
Sample of Example 2 Delta H = 41.7 J/g
Sample of Example 3 Delta H = 44.3 J/g
Sample of Example 4 Delta H = There were no variations. With Delta H there was a variation in enthalpy.

We can deduce from the data reported above that the viscoelastic polyurethane foams obtained with the invention, with the presence on the surface of a layer of "film", expediently maintaining good values regarding the other technical characteristics, possess those energy absorption properties that satisfy the purposes set out previously.

In Example 4, which is a product without a "film" with just viscoelastic polyurethane for moulding, it was seen that there was no energy absorption, in more explicit terms there is no feeling of freshness when a hand is put on it, while in examples 1, 2 and 3 there was a feeling of coolness that increased as the sample number increased, since it was in relation to the delta H.

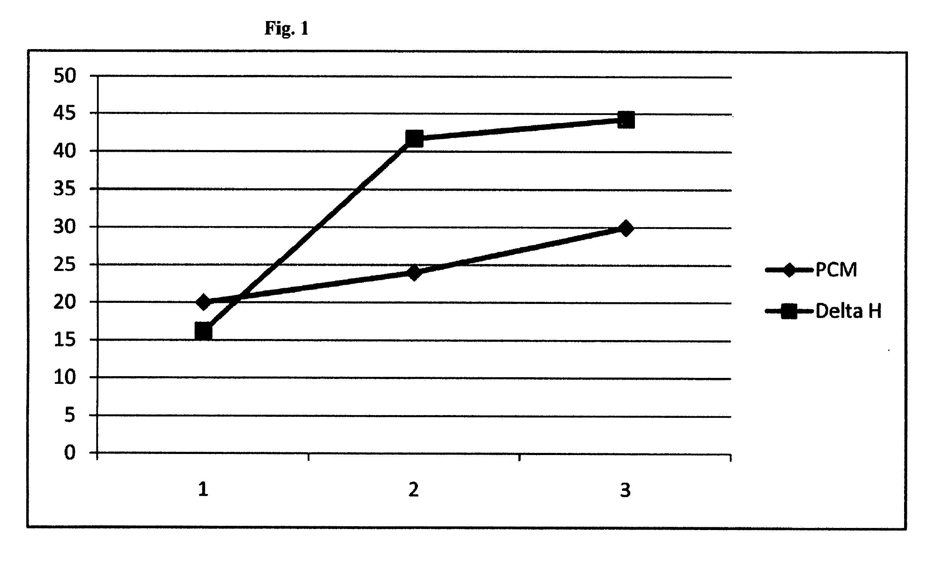

Lastly, by representing in a graphical manner the amount of PCM in the film used for the various samples with respect to the Delta H, as shown in Fig. 1, we can see the surprising effect of the extraction of the heat with respect to the amount of PCM present, which has a maximum efficiency for a quantity of 23-26 parts by weight of PCM out of 100 parts of "film".

## Claims

1. Viscoelastic polyurethane foam with particular surfaces and relative procedure, made up of a polyurethane composition and **characterised by** the fact that it has on at least one of its surfaces, or part of it, a film including at least:
- a primer or coating (physically dried, chemically dried, with two components, moisture-curing) in a quantity from 30 to 70 parts by weight out of a hundred parts by weight of the film composition;
- thinner (appropriate for the above-mentioned primer or coating) from 5 to 50 parts by weight over a hundred parts by weight of the film composition;
- PCM material (Phase Change Material) from 5 to 60 parts by weight over a hundred parts by weight of the film composition;

2. Viscoelastic polyurethane foam with particular surfaces and relative procedure as in claim 1, modified in the amounts of the following components of the film: from a quantity of 50 to 67 parts by weight of primer out of 100 parts by weight of film, from 10 to 25 parts by weight of the thinner out of 100 parts by weight of the film, from 10 to 40 parts by weight of the PCM out of 100 parts by weight of the film.

3. Viscoelastic polyurethane foam with particular surfaces and relative procedure as in claims 1 or 2, wherein the amount of PCM in the film composition is between 23 and 26 parts by weight out of 100 parts by weight of film, obtaining maximum efficiency in extracting the heat with respect to the amount of PCM used.

4. Viscoelastic polyurethane foam with particular surfaces and relative procedure as in claims 1 or 2 or 3, wherein there is no thinner.

5. Viscoelastic polyurethane foam with particular surfaces and relative procedure as in one or more of the previous claims, **characterised by** the fact that the polyurethane foam is a viscoelastic polyurethane foam.

6. Viscoelastic polyurethane foam with particular surfaces and relative procedure as in one or more of the previous claims, **characterised by** the fact that the film is co-pressed with the polyurethane foam.

7. Viscoelastic polyurethane foam with particular surfaces and relative procedure as in one or more of the previous claims, **characterised by** the fact that the PCM is in the form of acrylic micro-capsules.

8. Viscoelastic polyurethane foam with particular surfaces and relative procedure as in one or more of the previous claims, **characterised by** the fact that the PCM is in the form of acrylic micro-capsules, with particular substances added, especially vitamins or pro-vitamins, enclosed in wax micro-capsules.

9. Viscoelastic polyurethane foam with particular surfaces and relative procedure as in one or more of the previous claims, **characterised by** the fact that the polyurethane composition is a flexible foam for pressing, especially latex.

10. Procedure for obtaining viscoelastic polyurethane foam with particular surfaces, set out in one or more of the previous claims, **characterised by** the following passages:
- creation of a primer or coating film with added PCM, and possibly a thinner;
- spraying of said film mixture on at least one surface (or part of it) of a press, whose surfaces have been previously prepared with a release agent;
- creation of a diisocyanate mix and a polyolic composition for creating the polyurethane foam, eventually viscoelastic;
- realisation, as a substitute to the previous stage, of any polyurethane for pressing or a flexible press foam (like latex);
- injection or casting of above-mentioned mix for making the polyurethane foam (or another polyurethane for the press or flexible foam to be moulded), with the above-mentioned press with at least one of its surfaces there (or part of it) with the sprayed film.
